# EUROPÄISCHE PATENTSCHRIFT

(11) **EP 0 918 670 B1**
(45) Veröffentlichungstag und Bekanntmachung des Hinweises auf die Patenterteilung: **04.08.2004**
(21) Anmeldenummer: 98933514.6
(22) Anmeldetag: 13.05.1998
(51) Int. Cl.: B60S 1/16, H02K 7/116, H02K 7/08, F16H 57/02

(54) **ELEKTRISCHE ANTRIEBSEINHEIT**
ELECTRICAL DRIVE UNIT
UNITE D'ENTRAINEMENT ELECTRIQUE

(30) Priorität: 26.06.1997 DE 19727119
(43) Veröffentlichungstag der Anmeldung: 02.06.1999
(73) Patentinhaber: ROBERT BOSCH GMBH, 70442 Stuttgart (DE)
(72) Erfinder: FISCHER, Ernst, D-76593 Gernsbach (DE); HURST, Richard, D-77656 Offenburg (DE)
(86) Internationale Anmeldenummer: PCT/DE1998/001322
(87) Internationale Veröffentlichungsnummer: WO 1999/000277

(56) Entgegenhaltungen:
- DE-A- 19 508 306
- GB-A- 1 003 388
- GB-A- 2 317 504

## Beschreibung

### Stand der Technik

Die Erfindung betrifft eine elektrische Antriebseinheit, insbesondere für Scheibenwischer eines Kraftfahrzeugs, umfassend einen Antriebsmotor mit einem in einem im wesentlichen topfförmigen Pclgehäuse untergebrachten Anker, ein im wesentlichen topfförmiges, stirnseitig an dem Polgehäuse befestigtes Getriebegehäuse zur Aufnahme wenigstens eines Getriebezahnrades, das in eine mit einer Ankerwelle des Ankers verbundene Schnecke eingreift, wobei die Ankerwelle stirnseitig einen Anlaufpilz aufweist und die Feder aus dem Schenkel gebildet ist, der im montierten Zustand unter Ausübung einer Federkraft an dem Anlaufpilz der Ankerwelle anliegt.

Bei derartigen Antriebseinrichtungen darf die Ankerwelle des Wischermotors in axialer Richtung kein Spiel aufweisen, da andernfalls die gesamte Antriebseinrichtung einem erheblichen Verschleiß unterliegt und insbesondere als störend empfundene Klopfgeräusche entstehen.

Mit der GB-A-1 003 388 ist ein Wischerantrieb bekannt geworden, bei dem eine Ankerwelle axial mittels eines elastischen Federelements abgestützt wird. Das Federelement ist dabei in einer vordefinierten Position zwischen dem Getriebegehäuse und einem entsprechenden Anschlag fixiert und weist eine freibewegliche Federzunge auf, an der sich die Stirnseite der Ankerwelle abstützt.

Die GB-A-2 317 504 beschreibt ebenfalls ein Scheibenwischersystem mit einem Elektromotor, auf dessen Ankerwelle mittels einer Blattfeder eine Axialkraft ausgeübt wird. Dabei liegt ein freier Schenkel der Feder an der Stirnseite der Ankerwelle und ein anderer Schenkel am Getriebegehäuse an.

Eine weitere solche Antriebseinheit geht beispielsweise aus der DE-A-195 08 306 hervor. Bei dieser Antriebseinheit wird das Axialspiel durch ein vorgespanntes blattfederartiges Federelement eliminiert, welches insbesondere bei der Montage nur wenige Montageschritte erfordert und insoweit auch automatengerecht und deshalb besonders kostengünstig montiert werden kann.

Problematisch bei der Eliminierung des Axialspiels durch derartige Federelemente ist es, dass die Vorspannung der Feder nicht oder nur mit sehr großem Aufwand verändert werden kann.

Die Vorspannung ist im wesentlichen durch die Form des blattfederartigen Federelements und durch dessen Montageposition vorgegeben.

Der Erfindung liegt daher die Aufgabe zugrunde, eine elektrische Antriebseinheit, insbesondere für Scheibenwischer eines Kraftfahrzeugs, der gattungsgemäßen Art derart weiterzubilden, dass auf sehr einfache Weise, insbesondere auch im Zusammenhang mit einer automatischen Fertigung, eine Einstellung der Vorspannung des Federelements möglich ist.

### Vorteile der Erfindung

Diese Aufgabe wird bei einer elektrischen Antriebseinheit der eingangs beschriebenen Art erfindungsgemäß durch die im Kennzeichen des Anspruchs 1 enthaltenen Merkmale gelöst.

Die Verwendung einer gekrümmten Biegefeder, welche ein im wesentlichen V-förmiges Profil aufweist mit einer in dem Getriebegehäuse befestigten Spannplatte und einem in Axialrichtung der Ankerwelle federnden Schenkel, der im montierten Zustand und Ausübung einer Federkraft an dem Anlaufpilz der Ankerwelle anliegt, hat den besonders großen Vorteil, daß bei einer einfachen, auch auf automatischem Wege durchführbaren Montage der Feder eine präzise Einstellung der Vorspannung ermöglicht wird.

Da bekanntermaßen die Federkraft proportional zur Auslenkung der Feder ist, kann die Vorspannung durch Wahl der entsprechenden Montageposition variiert werden.

Die Vorspannung hängt dabei davon ab, wie stark der federnde Schenkel aus seiner Ruheposition, in der die Feder im wesentlichen ein V-förmiges Profil aufweist, hin zu der befestigten Spannplatte ausgelenkt ist.

Um die Biegefeder an einer gewünschten Position auf einfache Weise, insbesondere auch durch Automatenfertigung, zu positionieren und zu befestigen ist vorzugsweise vorgesehen, daß die Spannplatte seitliche Klemmelemente aufweist, die in einer dafür vorgesehenen Ausnehmung in dem Getriebegehäuse einerseits eine Axialverschiebung hin zu dem Anlaufpilz, andererseits eine Klemmbefestigung der Spannplatte an jeder gewünschten Position ermöglichen.

Die Federkonstante der Biegefeder, d.h. deren Vorspannung ist vorteilhafterweise durch deren Schenkellänge, Schenkelradius, Schenkelbreite, Schenkeldicke sowie deren axiale Positionierung in der Ausnehmung einstellbar. Dies ermöglicht eine präzise Einstellung der Vorspannung bei gleichzeitig schneller und unproblematischer Montage.

Die Biegefeder ist vorzugsweise ein Stanzteil und daher besonders kostengünstig auch in großer Stückzahl herstellbar.

### Zeichnung

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: schematisch eine Draufsicht auf eine erfindungsgemäße elektrische Antriebseinheit;
- Fig. 2: schematisch eine teilweise geschnittene Seitenansicht der in Fig. 1 dargestellten erfindungsgemäßen elektrischen Antriebseinheit;
- Fig. 3a: eine teilweise geschnittene Seitenansicht des vorderen Teils einer erfindungsgemäßen Antriebseinheit mit einer darin angeordneten Biegefeder im vormontierten Zustand;
- Fig. 3b: eine Draufsicht des in Fig. 3a dargestellten vorderen Teils einer erfindungsgemäßen elektrischen Antriebseinheit und
- Fig. 4a, b, c: verschiedene Ansichten einer Biegefeder zur Einstellung des Axiaspiels einer Ankerwelle der in den Fig. 1 bis 3 dargestellten erfindungsgemäßen elektrischen Antriebseinheit.

### Beschreibung der Ausführungsbeispiele

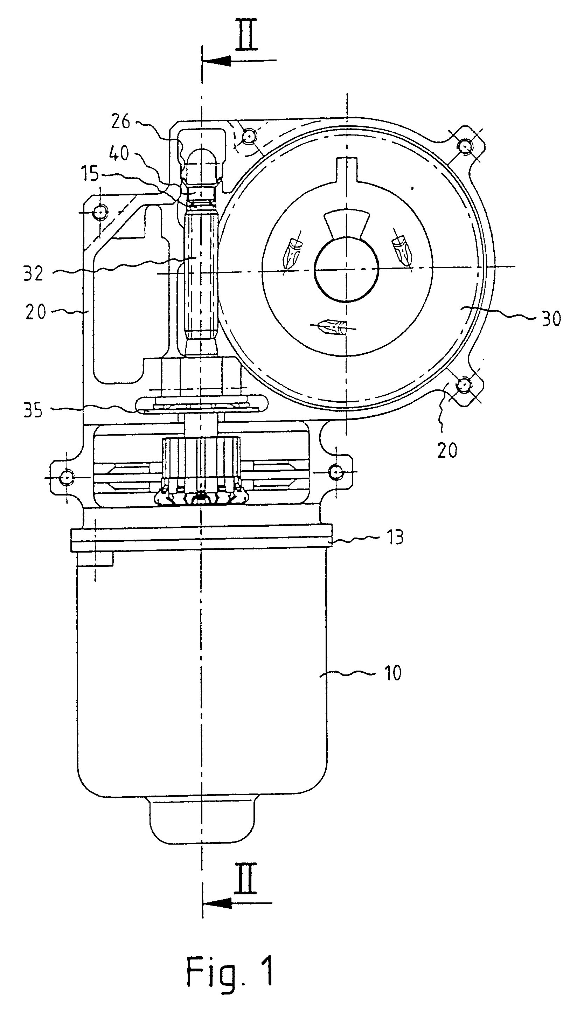

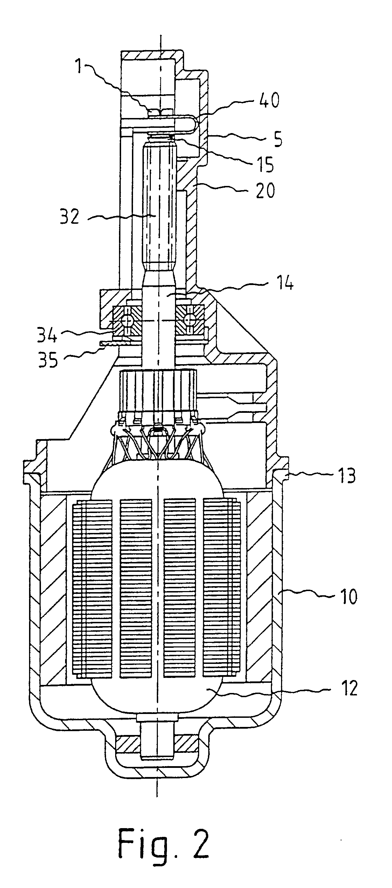

Eine in Fig. 1 und Fig. 2 dargestellte elektrische Antriebseinheit für Scheibenwischer eines Kraftfahrzeugs umfaßt ein im wesentlichen topfförmiges Polgehäuse 10, in dem ein Anker 12 untergebracht ist. Der Anker 12 und das Polgehäuse 10 bilden zusammen einen Antriebsmotor.

Stirnseitig an einem Flansch 13 des Polgehäuses 10 ist ein im wesentlichen topfförmiges Getriebegehäuse 20 befestigt, das zur Aufnahme eines Getriebezahnrades 30, das in eine mit einer Ankerwelle 14 des Ankers 12 verbundene Schnecke 32 eingreift, dient. Die Ankerwelle 14 weist an ihrer Stirnseite einen sogenannten Anlaufpilz 15 auf, auf den eine definierte Vorspannung in Axialrichtung der Ankerwelle 14 durch eine Biegefeder 40 ausgeübt wird. Auf der dem Anlaufpilz 15 abgewandten Seite der Schnecke 32 ist die Ankerwelle auf an sich bekannte Weise in einem Kugellager 34 gelagert, das durch einen Haltebügel 35 in dem Getriebegehäuse 20 axial gesichert ist.

Das Kugellager 34 ist auf der Ankerwelle befestigt.

Die Biegefeder 40 übt auf die Ankerwelle 14 eine definierte Federkraft auf, wodurch das Axialspiel in dem Kugellager 34, das bei derartigen Antriebseinheiten ca. 0,1 bis 0,2 mm beträgt, eliminiert wird. Darüber hinaus wird durch die Biegefeder 40 eine für die Laufeigenschaften des Kugellagers 34 erforderliche definierte Vorspannung erzeugt.

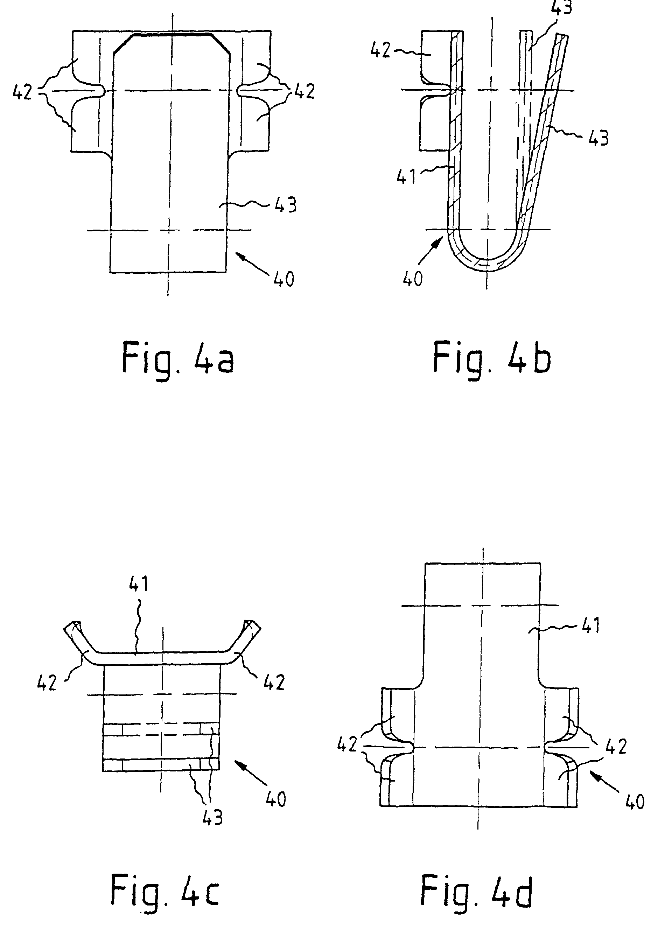

Wie insbesondere aus Fig. 4 hervorgeht, weist die Biegefeder 40 ein im wesentlichen V-förmiges Profil auf mit einer Spannplatte 41 mit seitlichen Klemmelementen 42, die in einer in dem Getriebegehäuse 30 vorgesehenen Ausnehmung 26 eine Klemmbefestigung der Spannplatte 41 ermöglicht, und mit einem in Axialrichtung der Ankerwelle 14 federnden Schenkel 43, der im montierten Zustand unter Ausübung einer Federkraft an dem Anlaufpilz 15 der Ankerwelle 14 zur Anlage kommt (siehe Fig. 1 und Fig. 2).

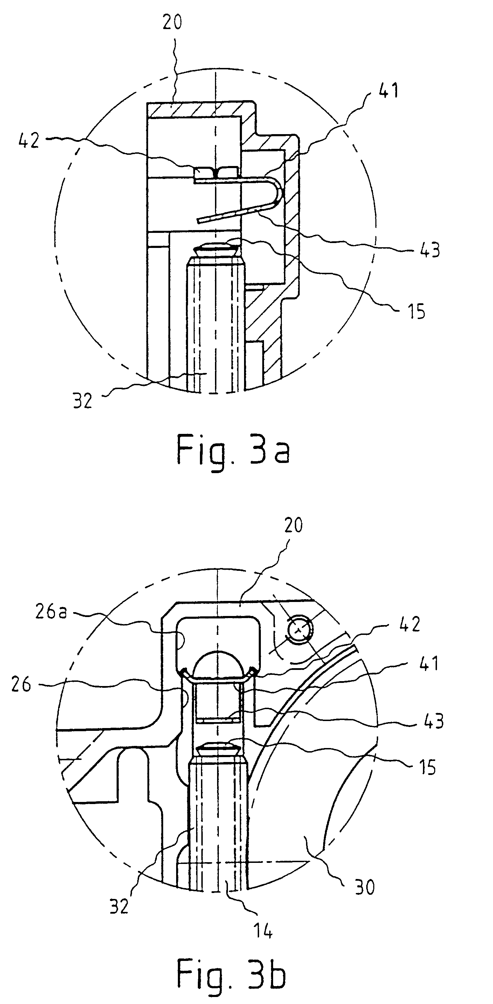

Die Montage der Biegefeder 40 und die Einstellung des Axialspiels der Ankerwelle 14 erfolgt auf die nachfolgend beschriebene, in Verbindung mit Fig. 3 erläuterte Weise.

Zunächst wird die Spannplatte 41 der Biegefeder 40 bei abgenommenem Getriebegehäusedeckel in die dafür vorgesehene Ausnehmung 26 in dem Getriebegehäuse 20 eingeführt. Hierfür weist die Ausnehmung 26 an ihrer dem Anlaufpilz 15 abgewandten Seite der Ankerwelle 14 einen Bereich 26a mit einer lichten Weite auf, die größer ist als der Abstand der Klemmelemente 42 im unmontierten Zustand.

Wie aus Fig. 3a hervorgeht, ist dabei der federnde Schenkel 43 von der Spannplatte 41 abgewinkelt, so daß die Biegefeder 40 ein im wesentlichen V-förmiges Profil aufweist. Zur Einstellung des Längsspiels der Ankerwelle 14 wird die Biegefeder 40 durch Ansetzen eines geeigneten Werkzeugs an der Spannplatte 41 hin zu dem Anlaufpilz 15 der Ankerwelle 14 geschoben. Die Biegefeder 40 wird dabei so weit zu dem Anlaufpilz 15 hingeschoben, daß der federnde Schenkel 43 an dem Anlaufpilz 15 anliegt. Dabei wird die Biegefeder derart deformiert, daß sie im fertig montierten Zustand ein im wesentlichen U-förmiges Profil aufweist (vergl. Fig. 1, Fig. 2 sowie die in gestrichelter Darstellung bezeichnete Stellung des Schenkels 43 in Fig. 4b und 4c).

Bei der Axialverschiebung der Biegefeder 40 kommen die Klemmelemente 42 an den Seitenwänden der Ausnehmung 26 in dem Getriebegehäuse 20, deren Abstand voneinander kleiner ist, als der Abstand der Schenkel 42 im unmontierten Zustand der Spannplatte 41, zur Anlage und ermöglichen so eine Klemmbefestigung der Spannplatte 41 in der Ausnehmung 26 und gleichzeitig eine Axialverschiebung der Spannplatte 41 und damit des federnden Schenkels 43 der Biegefeder 40 hin zu dem Anlaufpilz 15. Durch die Ausbildung des Vorspannmittels als Biegefeder mit der Spannplatte 41, den Klemmelementen 42 und dem federnden Schenkel 43 ist nicht nur eine einfache Montage, sondern auch eine einfache und schnelle Einstellung der Vorspannung des Axialspiels der Ankerwelle 14 möglich. Die Einstellung der gewünschten Vorspannung wird dabei durch die Ausbildung der Biegefeder 40, d.h. deren Schenkellänge, Schenkelradius, Schenkelbreite sowie Schenkeldicke und durch deren axiale Positionierung in der Ausnehmung 26 ermöglicht.

Die Einstellung des Axialspiels der Ankerwelle 14 und insbesondere auch der Vorspannung des Kugellagers 34 kann dabei bei ausgeschaltetem Antriebsmotor 12 und insbesondere auch in einem automatischen Fertigungsprozeß erfolgen.

## Patentansprüche

1. Elektrische Antriebseinheit, insbesondere für Scheibenwischer eines Kraftfahrzeugs, umfassend einen Antriebsmotor mit einem in einem im wesentlichen topfförmigen Polgehäuse (10) untergebrachten Anker (12), ein im wesentlichen topfförmiges, stirnseitig an dem Polgehäuse (10) befestigtes Getriebegehäuse (20) zur Aufnahme wenigstens eines Getriebezahnrades (30), das in eine mit einer Ankerwelle (14) des Ankers (12) verbundene Schnecke (32) eingreift, und an der Ankerwelle (14) eine Feder zur Erzeugung einer Vorspannung zur Anlage kommt, wobei die Feder eine gekrümmte Biegefeder (40) ist, welche ein im wesentlichen V-förmiges Profil mit einem in Axialrichtung der Ankerwelle (14) federnden Schenkel (43) aufweist, wobei die Ankerwelle (14) stirnseitig einen Anlaufpilz (15) aufweist und die Feder aus dem Schenkel (43) gebildet ist, der im montierten Zustand unter Ausübung einer Federkraft an dem Anlaufpilz (15) der Ankerwelle (14) anliegt, **dadurch gekennzeichnet, daß** die Feder aus einer in dem Getriebegehäuse (20) mittels Klemmelementen (42) befestigten Spannplatte (41) gebildet ist, wobei eine definierte Vorspannung durch Wahl einer entsprechenden Montageposition mittels einer gleichzeitigen Axialverschiebung der Spannplatte (41) mit dem federnden Schenkel (43) präzise einstellbar ist.

2. Elektrische Antriebseinheit nach Anspruch 1, **dadurch gekennzeichnet, daß** die seitlichen Klemmelemente (42) in einer dafür vorgesehenen Ausnehmung (26) in dem Getriebegehäuse (20) einerseits eine Axialverschiebung der Spannplatte (41) hin zu dem Anlaufpilz (15), andererseits eine Klemmbefestigung derselben an einer gewünschten Position ermöglichen.

3. Elektrische Antriebseinheit nach Anspruch 1 oder 2, **dadurch gekennzeichnet, daß** eine gewünschte Vorspannung der Biegefeder (40) durch deren Schenkellänge, Schenkelradius, Schenkelbreite, Schenkeldicke sowie deren axiale Positionierung in der Ausnehmung (26) einstellbar ist.

4. Elektrische Antriebseinheit nach einem der Ansprüche 1 bis 3, **dadurch gekennzeichnet, daß** die Biegefeder (40) ein Stanzteil ist.

## Claims

1. Electric drive unit, in particular for windscreen wipers of a motor vehicle, comprising a drive motor having an armature (12) accommodated in a pole casing (10) which is essentially in the form of a pot, a gear-mechanism casing (20), which is essentially in the form of a pot and is fixed at the end on the pole casing (10), for accommodating at least one gear-mechanism gearwheel (30), which engages in a worm (32) which is connected to an armature shaft (14) of the armature (12), and a spring for producing a prestress comes to bear against the armature shaft (14), the spring being a bent torsion spring (40), which has an essentially V-shaped profile having a limb (43) which is sprung in the axial direction of the armature shaft (14), the armature shaft (14) at its end having an inclined mushroom button (15), and the spring being formed from the limb (43), which, when assembled, bears against the inclined mushroom button (15) of the armature shaft (14) so as to exert a spring force, **characterized in that** the spring is formed from a clamping plate (41), which is fixed in the gear-mechanism casing (20) by means of clamping elements (42), it being possible to precisely set a defined prestress by selecting a corresponding installation position by means of simultaneous axial displacement of the clamping plate (41) with the sprung limb (43).

2. Electric drive unit according to Claim 1, **characterized in that** the lateral clamping elements (42) in a recess (26) provided for this purpose in the gear-mechanism casing (20) make it possible, on the one hand, to axially displace the clamping plate (41) towards the inclined mushroom button (15) and, on the other hand to fix the latter in a clamping manner in a desired position.

3. Electric drive unit according to Claim 1 or 2, **characterized in that** it is possible to set a desired prestress for the torsion spring (40) by the length, radius, width and thickness of its limb and by its axial positioning in the recess (26).

4. Electric drive unit according to one of Claims 1 to 3, **characterized in that** the torsion spring (40) is a stamped part.

## Revendications

1. Unité d'entraînement électrique, en particulier pour les essuie-glaces d'un véhicule automobile, comprenant un moteur d'entraînement doté d'un induit (12) logé dans un carter d'extrémité (10) pour l'essentiel en forme de pot, un carter d'engrenage (20) pour l'essentiel en forme de pot, fixé du côté avant au carter d'extrémité (10), permettant de loger au moins une roue dentée d'engrenage (30), qui s'engrène avec une vis sans fin (32) reliée à un arbre d'induit (14) de l'induit (12), avec un ressort permettant de générer une précontrainte monté sur l'arbre d'induit (14), ce ressort étant un ressort de flexion courbe (40) qui présente un profil pour l'essentiel en forme de V et qui comporte une branche (43) élastique dans la direction axiale de l'arbre d'induit (14), alors que l'arbre d'induit (14) présente du côté avant un bouton de démarrage (15) et que le ressort est formé à partir de la branche (43) qui à l'état monté, sous l'application d'une force élastique au niveau du bouton de démarrage (15), est pressée contre l'arbre d'induit (14),
**caractérisée en ce que**
le ressort est formé à partir d'une plaque (41) fixée dans le carter d'engrenage (20) au moyen d'éléments de serrage (42), et une précontrainte définie peut être réglée de façon précise par le choix d'une position de montage correspondante, au moyen d'un déplacement axial simultané de la plaque (41) et de la branche élastique (43).

2. Unité d'entraînement électrique selon la revendication 1,
**caractérisée en ce que**
les éléments de serrage latéraux (42) permettent, dans un renfoncement (26) prévu à cette effet dans le carter d'engrenage (20), d'une part un déplacement axial de la plaque (41) vers le bouton de démarrage (15) et d'autre part une fixation par serrage de celle-ci en une position souhaitée.

3. Unité d'entraînement électrique selon la revendication 1 ou 2,
**caractérisée en ce qu'**
il est possible de régler une précontrainte souhaitée du ressort de flexion (40) par le biais de la longueur de la branche, du rayon de la branche, de la largeur de la branche, de l'épaisseur de la branche, ainsi que de régler son positionnement axial dans le renfoncement (26).

4. Unité d'entraînement électrique selon l'une des revendications 1 à 3,
**caractérisée en ce que**
le ressort de flexion (40) est une pièce emboutie.
